Europäisches Patentamt

**European Patent Office**

Office européen des brevets

(19)

(11) Veröffentlichungsnummer: **0 078 786**
**B1**

(12) **EUROPÄISCHE PATENTSCHRIFT**

(45) Veröffentlichungstag der Patentschrift:
11.07.84

(51) Int. Cl.³: **C 04 B 7/44**, F 27 B 7/20

(21) Anmeldenummer: **82890143.9**

(22) Anmeldetag: **07.10.82**

(54) **Verfahren zum Herstellen von Zement.**

(30) Priorität: **03.11.81 AT 4693/81**

(43) Veröffentlichungstag der Anmeldung:
**11.05.83 Patentblatt 83/19**

(45) Bekanntmachung des Hinweises auf die Patenterteilung:
**11.07.84 Patentblatt 84/28**

(84) Benannte Vertragsstaaten:
**BE CH DE FR GB IT LI NL SE**

(56) Entgegenhaltungen:
**DE - A - 2 931 590**

(73) Patentinhaber: **VOEST-ALPINE Aktiengesellschaft, Werksgelände, A-4010 Linz (AT)**
Patentinhaber: **VEB Schwermaschinenbau-Kombinat Ernst Thälmann Magdeburg, Marienstrasse 20, DDR-3011 Magdeburg (DD)**

(72) Erfinder: **Krennbauer, Franz, Marcusgang 5, A-4020 Linz (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

## Beschreibung

Die Erfindung bezieht sich auf ein Verfahren zum Herstellen von Zement, bei dem das Rohmehl vor einem Entsäuern in einem Kalzinator und einem anschliessenden Brennen in einem Ofen in einem mehrstufigen Wärmeaustausch mit Abgasströmen aus dem Ofen und aus dem Kalzinator in zwei parallelen Abgassträngen vorgewärmt wird, wobei der Rohmehlstrom abwechselnd von einer Wärmetauscherstufe des einen zu einer Wärmetauscherstufe des anderen Abgasstranges geführt wird, und auf eine Vorrichtung zur Durchführung des Verfahrens.

Um einerseits die Entsäuerung im Kalzinator durch eine Verminderung des Kohlendioxid-Partialdruckes und anderseits die Vorwärmung des Rohmehles vor dem Eintritt in den Kalzinator zu verbessern, ist es bekannt (DE-A-29 31 590), den Kalzinator nicht mit dem Ofenabgas, sondern mit der beim Abkühlen des bereits gebrannten Zementklinkers erwärmten Kühlluft zu speisen und die Abgasströme aus dem Ofen und aus dem Kalzinator in zwei voneinander getrennten, parallelen Abgassträngen eines mehrstufigen Wärmetauschers zu führen, wobei der Rohmehlstrom abwechselnd von einer Wärmetauscherstufe des einen zu einer Wärmetauscherstufe des anderen Stranges bis zum Kalzinator geführt wird. Zufolge dieser Massnahmen bleibt der Kalzinator von der nachteiligen Beaufschlagung mit den Ofenabgasen frei. Ausserdem kann durch die heissen Ofenabgase der Rohmehlstrom in der dem Kalzinator hinsichtlich des Rohmehlstromes unmittelbar vorgeordneten Wärmetauscherstufe auf eine höhere Vorwärmtemperatur als bei einer einflutigen Abgasführung gebracht werden, weil die Abgastemperatur des Ofens höher als die Temperatur des Abgases aus dem Kalzinator liegt. Nachteilig bei diesem bekannten Verfahren ist jedoch, dass das Rohmehl in zwei dosierten Teilströmen aufgegeben werden muss, um annähernd gleiche Temperaturverhältnisse der beiden Abgasströme am kalten Ende des Wärmetauschers sicherzustellen. Diese beiden Teilströme werden zwar wieder vereinigt und gemeinsam zwischen den Wärmetauscherstufen der Abgasstränge hin- und hergeleitet, doch bedingt eine solche Rohmehlführung nicht nur einen vergrösserten Aufwand, sondern auch eine schlechtere Wärmeausnützung, weil bei sonst gleichen Bedingungen die Austrittstemperaturen der Abgasströme vom Massenverhältnis zwischen Rohmehl und Abgas abhängt. Dazu kommt noch, dass für jeden Abgasstrom ein gesondertes Gebläse erforderlich ist, wenn nicht aufgrund der unterschiedlichen Abgastemperaturen und -drücke eine Überdimensionierung eines gemeinsamen Gebläses in Kauf genommen wird. Schliesslich ist der weitere Nachteil anzuführen, dass die beiden Abgasstränge des Wärmetauschers zufolge der unterschiedlichen Abgasströme verschieden ausgelegt werden müssen, wobei die Konzentration der zum Anbacken neigenden Ballaststoffe im Ofenstrang wesentlich höher als im Kalzinatorstrang ist, was unter Umständen besondere Massnahmen für den Ofenstrang erfordert.

Der Erfindung liegt somit die Aufgabe zugrunde, diese Mängel zu vermeiden und ein Verfahren zum Herstellen von Zement der eingangs geschilderten Art so zu verbesern, dass einerseits der Geräteaufwand wesentlich verringert und anderseits der thermische Wirkungsgrad verbessert werden kann.

Die Erfindung löst die gestellte Aufgabe dadurch, dass der Abgasstrom aus dem Ofen nach einer Wärmeabgabe an das Rohmehl in der dem Kalzinator hinsichtlich des Rohmehlstromes unmittelbar vorgeordneten Wärmetauscherstufe mit dem Abgasstrom aus dem Kalzinator vermischt wird, bevor der Abgas-Mischstrom gleichmässig auf die Abgasstränge des Wärmetauschers aufgeteilt wird.

Durch das Vermischen der Abgasströme aus dem Ofen und aus dem Kalzinator werden in einfachster Weise für die Abgasstränge des Wärmetauschers gleiche Verhältnisse sichergestellt, so dass eine Aufteilung des Rohmehlstromes in Teilströme bei der Rohmehlaufgabe unterbleiben kann. Damit wird eine verbesserte Ausnützung der fühlbaren Abwärme der Abgasströme mit einem vereinfachten Geräteaufwand verbunden, weil die Abgasstränge des Wärmetauschers übereinstimmend ausgelegt werden können. Die durch die einzelnen Wärmetauscherstufen strömenden Abgasmengen sind für beide Abgasstränge gleich gross und weisen gleiches Druckniveau auf. Darüber hinaus wird eine in beiden Abgassträngen gleiche Konzentration an Ballaststoffen erhalten, die niedriger als die Ballaststoffkonzentration in einem gesonderten Ofenstrang ist, so dass auch hinsichtlich der Anbackungsgefahr Vorteile erzielt werden.

Da in beiden Abgassträngen gleiche Druckverhältnisse herrschen, können die Teile des Abgas-Mischstromes vor dem Abblasen ins Freie problemlos vereinigt werden, was die Verwendung eines gemeinsamen Gebläses ermöglicht.

Bei der Konstruktion einer Anlage zur Durchführung des Verfahrens kann vorteilhaft von einer Vorrichtung mit einem Ofen zum Brennen des entsäuerten Rohmehles und einem dem Ofen vorgeordenten Kalzinator ausgegangen werden, dem ein mehrstufiger Wärmetauscher vorgeordnet ist, dessen Wärmetauschereinheiten in zwei parallelen, an die Abgasleitungen des Ofens und des Kalzinators angeschlossenen Abgassträngen hintereinandergeschaltet sind, wobei dei Austragleitungen für das Rohmehl der Wärmetauschereinheiten des einen Stranges mit den Aufgabeleitungen der Wärmetauschereinheiten des anderen Stranges abwechselnd verbunden sind. Münden bei einer solchen Vorrichtung die Gasaustrittsleitung der unmittelbar an die Abgasleitung des Ofens angeschlossenen Wärmetauschereinheit und die Abgasleitung des Kalzinators in einer Mischkammer, an die die Gaszuführungsleitungen für die beiden Abgasstränge des Wärmetauschers angeschlossen sind, so wird in sehr einfacher Weise ein Mischstrom aus den Abgasen des Ofens und des Kalzinators erzeugt und dieser Abgas-Mischstrom auf die Abgasstränge des Wärmetauschers aufgeteilt, wobei mittels einer Mengenregelung die gewünschte Aufteilung auf die beiden Abgasstränge sichergestellt werden kann, falls dies notwendig sein sollte. Die Mischkammer braucht hiefür im allgemeinen nicht besonders ausgebildet zu sein. Eine Vereinigung der Gasaustrittsleitung der unmittelbar an die Abgasleitung des Ofens angeschlossenen Wärmetauschereinheit mit der Abgasleitung des Kalzinators wird üblicherweise für eine ausreichende Mischung der Abgasströme aus dem Ofen und aus dem Kalzinator genügen.

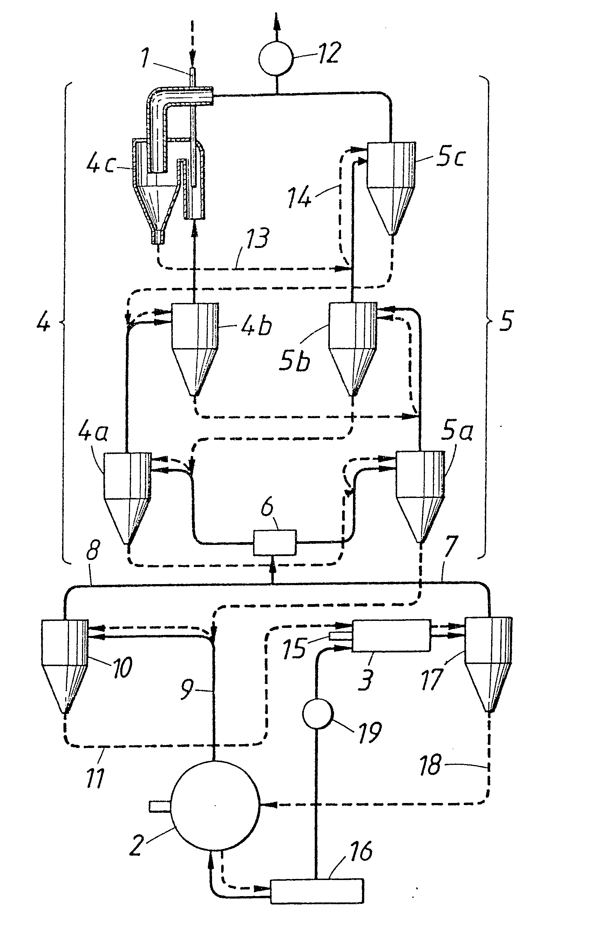

In der Zeichnung ist eine Vorrichtung zur Durchführung eines erfindungsgemässen Verfahrens zum Herstellen von Zement beispielhaft in einem vereinfachten Blockschaltbild dargestellt.

Das Rohmehl, dessen Fliesschema in strichlierten Linien angedeutet ist, wird über eine Aufgabeleitung 1 einem mehrstufigen Wärmetauscher zugeführt, der mit Hilfe der Abgase aus einem Drehrohrofen 2 zum Brennen des vorgewärmten und kalzinierten Rohmehls und der Abgase eines dem Drehrohrofen 2 vorgeordneten Kalzinators 3 beheizt wird. Dieser Wärmetauscher weist zwei parallele Abgasstränge 4 und 5 auf, die von den als Zyklonen ausgebildeten Wärmetauschereinheiten 4a, 4b und 4c einerseits sowie von den Wärmetauschereinheiten 5a, 5b und 5c anderseits gebildet werden. Wie aus dem in vollen Linien dargestellten Fliesschema für die Abgasströme entnommen werden kann, werden die Abgasstränge 4 und 5 des Wärmetauschers an eine Mischkammer 6 angeschlossen, in die die Abgasleitung 7 des Kalzinators 3 und die Gasaustrittsleitung 8 einer an die Ofenabgasleitung 9 angeschlossenen Wärmetauschereinheit 10 münden, deren Austragsleitung 11 für das Rohmehl mit dem Kalzinator 3 verbunden ist. Nach dem Durchströmen der beiden Abgasstränge 4 und 5 werden die beiden Teilströme wieder vereinigt und mittels eines gemeinsamen Gebläses 12 ins Freie abgeblasen.

Das über die Aufgabeleitung 1 dem Wärmetauscher zugeführte Rohmehl gelangt zunächst in die Wärmetauschereinheit 4c, von der der Rohmehlstrom über die Austragsleitung 13 der Wärmetauschereinheit 5c des Abgasstranges 5 zugeführt wird, in dessen Aufgabeleitung 14 die Austragsleitung 13 mündet. Im folgenden wird der Rohmehlstrom abwechselnd zwischen den Wärmetauschereinheiten der Abgasstränge 4 und 5 hin- und hergeführt, wobei das Rohmehl stufenweise aufgewärmt wird. Bevor das Rohmehl dem Kalzinator 3 zugeführt wird, gelangt es in die vom Ofenabgas alleine beheizte Wärmetauschereinheit 10, so dass es durch die gegenüber dem Abgasstrom aus dem Kalzinator 3 heisseren Ofenabgase auf eine höhere Vorwärmtemperatur gebracht werden kann. Mit dieser Ofengasführung ist eine entsprechende Abkühlung der Ofenabgase verbunden, was ein niedrigeres Temperaturniveau in der Mischkammer 6 und damit auch eine niedrigere Abgastemperatur im Bereich des Gebläses 12 zur Folge hat.

Im Kalzinator 3 wird das Rohmehl entsäuert, wobei die hiefür erforderlichen, zusätzlichen Wärmemengen über einen Brenner 15 zugeführt werden. Als Verbrennungsluft wird vorteilhaft ein Teil der erwärmten Kühlluft aus einem dem Drehrohrofen 2 nachgeordneten Kühler 16 verwendet, dem das zu Zementklinker gebrachte Rohmehl aus dem Drehrohrofen zugeleitet wird. Ein anderer Teil der Kühlluft aus dem Kühler 16 wird dem Drehrohrofen 2 als Verbrennungsluft zugeführt. Das im Kalzinator 3 entsäuerte Rohmehl wird mit dem Abgasstrom aus dem Kalzinator einem Zyklonabscheider 17, dessen Austragsleitung 18 für das Rohmehl im Drehrohrofen 2 mündet, zugefördert. Zur Steuerung der erforderlichen Verbrennungsluft für den Kalzinator 3 in Abhängigkeit von der jeweiligen Brennstoffmenge ist eine Regelklappe 19 vorgesehen.

Obwohl aufgrund des übereinstimmenden Aufbaues der Abgasstränge 4 und 5 des Wärmetauschers im allgemeinen gleiche Abgasmengen durch die Stränge 4 und 5 strömen werden, kann auch für eine zwangsweise Aufteilung des Abgas-Mischstromes mit Hilfe entsprechender Steuereinrichtungen gesorgt werden.

Wie sich aus dem Blockschaltbild einer erfindungsgemässen Vorrichtung zum Herstellen von Zement anschaulich ergibt, werden durch das Vermischen der Abgasströme aus dem Ofen 2 und dem Kalzinator 3 für die beiden Abgasstränge 4 und 5 des Wärmetauschers gleiche Verhältnisse geschaffen, die einerseits eine gerätemässige Vereinfachung der Anlage sicherstellen und anderseits ein hinsichtlich des thermischen Wirkungsgrades vorteilhaftes Verfahren ermöglichen, das ausserdem die Nachteile hoher Ballaststoffkonzentrationen, wie sie sonst im Ofenstrang auftreten, stark herabsetzt.

**Patentansprüche**

1. Verfahren zum Herstellen von Zement, bei dem das Rohmehl vor einem Entsäuern in einem Kalzinator (3) und einem anschliessenden Brennen in einem Ofen (2) in einem mehrstufigen Wärmeaustausch mit Abgasströmen aus dem Ofen (2) und aus dem Kalzinator (3) in zwei parallelen Abgassträngen (4, 5) vorgewärmt wird, wobei der Rohmehlstrom abwechselnd von einer Wärmetauscherstufe (4a, 4b, 4c) des einen zu einer Wärmetauscherstufe (5a, 5b, 5c) des anderen Abgasstranges geführt wird, dadurch gekennzeichnet, dass der Abgasstrom aus dem Ofen (2) nach einer Wärmeabgabe an das Rohmehl in der dem Kalzinator (3) hinsichtlich des Rohmehlstromes unmittelbar vorgeordneten Wärmetauscherstufe (10) mit dem Abgasstrom aus dem Kalzinator (3) vermischt wird, bevor der Abgas-Mischstrom gleichmässig auf die Abgasstränge (4, 5) aufgeteilt wird.

2. Verfahren nach Anspruch 1, dadurch gekennzeichnet, dass die Teilströme des Abgas-Mischstromes vor dem Abblasen wieder vereinigt werden.

3. Vorrichtung zur Durchführung des Verfahrens nach Anspruch 1 oder 2 mit einem Ofen (2) zum Brennen des entsäuerten Rohmehls und einem dem Ofen (2) vorgeordneten Kalzinator (3), dem ein mehrstufiger Wärmetauscher vorgeordnet ist, dessen Wärmetauschereinheiten (4a, 4b, 4c, 5a, 5b, 5c) in zwei parallelen, an die Abgasleitungen des Ofens (2) und des Kalzinators (3) angeschlossenen Abgassträngen (4, 5) hintereinandergeschaltet sind, wobei die Austragsleitungen (13) für das Rohmehl der Wärmetauschereinheiten des einen Stranges (4 bzw. 5) mit den Aufgabeleitungen (14) der Wärmetauschereinheiten des anderen Stranges (5 bzw. 4) abwechselnd verbunden sind, dadurch gekennzeichnet, dass die Gasaustrittsleitung (8) der unmittelbar an die Abgasleitung (9) des Ofens (2) angeschlossenen Wärmetauschereinheit (10) und die Abgasleitung (7) des Kalzinators (3) in einer Mischkammer (6) münden, an die die Gaszuführungsleitungen für die beiden Abgasstränge (4, 5) angeschlossen sind.

4. Vorrichtung nach Anspruch 3, dadurch gekennzeichnet, dass die von der Mischkammer (6) ausgehenden Abgasstränge (4, 5) des Wärmetauschers an ein gemeinsames Abgasgebläse (12) angeschlossen sind.

## Claims

1. A process of making cement in which the ground raw material is de-acidified in a calcinator (3) and subsequently burnt in a kiln (2) and before its de-acidification is preheated in two parallel exhaust gas lines (4, 5) by a multi-stage heat exchange with exhaust gas streams from the kiln (2) and the calcinator (3), wherein the ground raw material is conducted in alternation from a heat exchanger stage (4a, 4b, 4c) of one exhaust gas line to a heat exchanger stage (5a, 5b, 5c) of the other exhaust gas line, characterized in that the exhaust gas stream from the kiln (2) is caused to deliver heat to the ground raw material in the heat exchanger stage (10) which directly precedes the calcinator in the flow path of the ground raw material and the exhaust gas stream from the kiln is subsequently mixed with the exhaust gas stream from the calcinator (3) before the stream of mixed exhaust gases is uniformly distributed to the exhaust gas lines (4, 5).

2. A process according to claim 1, characterized in that the partial streams of mixed exhaust gases are re-combined before they are blown off.

3. Apparatus for carrying out the process according to claim 1 or 2, comprising a kiln (2) for burning the de-acidified ground raw material, a calcinator which precedes the kiln (2), and a multi-stage heat exchanger, which precedes the calcinator and comprises heat exchanger units (4a, 4b, 4c, 5a, 5b, 5c), which are connected in series in two parallel exhaust gas lines (4, 5), which are connected to the exhaust gas conduits of the kiln (2) and of the calcinator (3), wherein the ground raw material discharge conduits (13) of the heat exchanger units of one exhaust gas line (4 or 5) are connected in alternation to the feed conduits (14) of the heat exchanger units of the other exhaust gas line (5 or 4), characterized in that the gas outlet conduit (8) of that heat exchanger unit (10) which is directly connected to the exhaust gas conduit (9) of the kiln (2) and the exhaust gas conduit (7) of the calcinator (3) open into a mixing chamber (6), to which the gas-feeding conduits leading to the two exhaust gas lines (4, 5) are connected.

4. Apparatus according to claim 3, characterized in that the exhaust gas lines (4, 5) of the heat exchanger which extend from the mixing chamber (6) are connected to a common exhaust gas blower (12).

## Revendications

1. Procédé pour fabriquer du ciment, dans lequel la farine crue est préchauffée par un échange de chaleur en plusierus étages avec des flux de gaz de combustion provenant du four (2) et du calcinateur (3) par deux branches (4, 5) parallèles de gaz de combustion avant toute désacidification dans un calcinateur (3) et toute calcination consécutive dans un four (2), tandis que le flux de farine crue est conduit alternativement d'un étage d'échangeur de chaleur (4a, 4b, 4c) de l'une des branches de gaz de combustion à un étage d'échangeur de chaleur (5a, 5b, 5c) de l'autre branche, procédé caractérisé par le fait que le flux de gaz de combustion sortant du four (2) est mélangé, après une cession de chaleur à la farine crue, au flux de gaz de combustion sortant du calcinateur (3) dans l'étage (10) d'échangeur de chaleur prévu immédiatement devant le calcinateur (3) en regardant dans le sens de l'écoulement de la farine crue, et avant que le flux mixte de gaz de combustion ne soit régulièrement réparti sur les branches (4, 5) de gaz de combustion.

2. Procédé selon la revendication 1, caractérisé par le fait que les flux partiels du flux mixte de gaz de combustion sont de nouveau réunis avant leur évacuation.

3. Dispositif prévu pour la mise en œuvre du procédé selon la revendication 1 ou 2, comportant un four (2) pour griller la farine crue décarbonatée et un calcinateur (3) installé en amont du four (2) et précédé d'un échangeur de chaleur à étages multiples dont les unités d'échangeur de chaleur (4a, 4b, 4c, 5a, 5b, 5c) sont montées en série l'une derrière l'autre dans deux branches parallèles (4, 5) de gaz de combustion branchées sur les conduites à gaz de combustion du four (2) et du calcinateur (3), tandis que les conduites d'extraction (13) pour la farine crue prévues sur les unités d'échangeur de chaleur de l'une des branches (4 ou 5) sont reliées en alternance aux conduites d'alimentation (14) des unités d'échangeur de chaleur de l'autre branche (5 ou 4), dispositif caractérisé par le fait que la conduite (8) de sortie des gaz de l'unité (10) d'échangeur de chaleur qui est directement branchée à la conduite (9) de gaz de combustion du four (2), et la conduite (7) de gaz de combustion du calcinateur (3) débouchent dans une chambre de mélange (6) à laquelle sont branchées les conduites d'arrivée de gaz pour les deux branches (4, 5) de gaz de combustion.

4. Dispositif selon la revendication 3, caractérisé par le fait que les branches (4, 5) de gaz de combustion de l'échangeur de chaleur, qui partent de la chambre de mélange (6), sont branchées sur une soufflerie (12) commune pour gaz de combustion.